# EUROPEAN PATENT APPLICATION

(11) **EP 4 340 106 A1**
(43) Date of publication of application: **20.03.2024**
(21) Application number: 22216375.0
(22) Date of filing: 23.12.2022
(51) Int. Cl.: H01M 50/209, H01M 50/264

(54) **ENERGY STORAGE BATTERY BOX**

(30) Priority: 15.09.2022 CN 202211122762
(71) Applicant: CALB Co., Ltd., Changzhou City, Jiangsu Province (CN)
(72) Inventor: XIAO, Kang, Changzhou City, Jiangsu Province (CN); ZHENG, Licheng, Changzhou City, Jiangsu Province (CN); LI, Wei, Changzhou City, Jiangsu Province (CN); SHI, Tengteng, Changzhou City, Jiangsu Province (CN)
(74) Representative: Becker, Eberhard

(57) **Abstract**

The disclosure discloses an energy storage battery box including a battery apparatus, a box body (5), and a compression component. The battery apparatus includes a plurality of batteries (3) stacked in sequence. The box body (5) is internally provided with an accommodating cavity suitable for accommodating the battery apparatus. One side of the box body (5) is provided with an opening in a stacking direction of the batteries (3), and the opening communicates with the accommodating cavity. The compression component is adapted to seal the opening. The compression component and an edge of the opening are detachably connected.

## Description

### BACKGROUND

### Technical Field

The disclosure relates to the technical field of battery modules, and in particular, to an energy storage battery box.

### Description of Related Art

At present, the energy storage batteries in an energy storage battery box are usually arranged through arrangement with battery modules or arrangement without battery modules. When the energy storage batteries are arranged through the arrangement with battery modules, since the interior of the battery modules has been fixed, it is only necessary to directly fix the battery modules to the energy storage battery box in actual use.

However, when the batteries are arranged through the arrangement without battery modules, since the individual battery cells are not fixed, after the individual battery cells are directly installed into the energy storage battery box, an additional clamping device or fixing device is required to fix the individual battery cells to the energy storage battery box, and the installation process of the energy storage battery box becomes complicated.

### SUMMARY

The disclosure provides an energy storage battery box including a battery apparatus, a box body, and a compression component. The battery apparatus includes a plurality of batteries stacked in sequence. The box body is internally provided with an accommodating cavity suitable for accommodating the battery apparatus. One side of the box body is provided with an opening in a stacking direction of the batteries, and the opening communicates with the accommodating cavity. The compression component is adapted to seal the opening. The compression component and an edge of the opening are detachably connected.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a three-dimensional view of a compression component and batteries according to an embodiment of the disclosure.
FIG. 2 is an overall schematic view of an energy storage battery box according to an embodiment of the disclosure.
FIG. 3 is a schematic view of an end plate not fixed in place according to an embodiment of the disclosure.
FIG. 4 is a schematic view of the end plate fixed in place according to an embodiment of the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

Compared to the related art, the beneficial effects of the disclosure include the following.
1. An embodiment of the disclosure provides an energy storage battery box including a battery apparatus, a box body, and a compression component. The battery apparatus includes a plurality of batteries stacked in sequence. The box body is internally provided with an accommodating cavity suitable for accommodating the battery apparatus. One side of the box body is provided with an opening in a stacking direction of the batteries, and the opening communicates with the accommodating cavity. The compression component is adapted to seal the opening. The compression component and an edge of the opening are detachably connected.

In this way, the battery apparatus can be pressed during the process of fixing the compression component to the opening. When the compression component completely seals the opening, the compression component may also compress and fasten the plurality of batteries stacked in sequence at the same time. As such, an additional clamping device or fixing device is not required to be used to fix the individual batteries and the energy storage battery box, and the installation process of the energy storage battery box is thus simplified.

In addition, the technical features involved in the different embodiments of the disclosure described below can be combined with each other as long as the technical features do not conflict with each other.

At present, the energy storage batteries in an energy storage battery box are usually arranged through arrangement with battery modules or arrangement without battery modules. When the energy storage batteries are arranged through the arrangement with battery modules, since the interior of the battery modules has been fixed, it is only necessary to directly fix the battery modules to the energy storage battery box in actual use. However, when the batteries are arranged through the arrangement without battery modules, since the individual battery cells are not fixed, after the individual battery cells are directly installed into the energy storage battery box, an additional clamping device or fixing device is required to fix the individual battery cells to the energy storage battery box, and the installation process of the energy storage battery box becomes complicated.

Therefore, the disclosure provides an energy storage battery box so as to solve the technical problem of a complicated installation process of the energy storage battery box when the arrangement without battery modules as provided in the related art is adopted.

### Embodiment 1

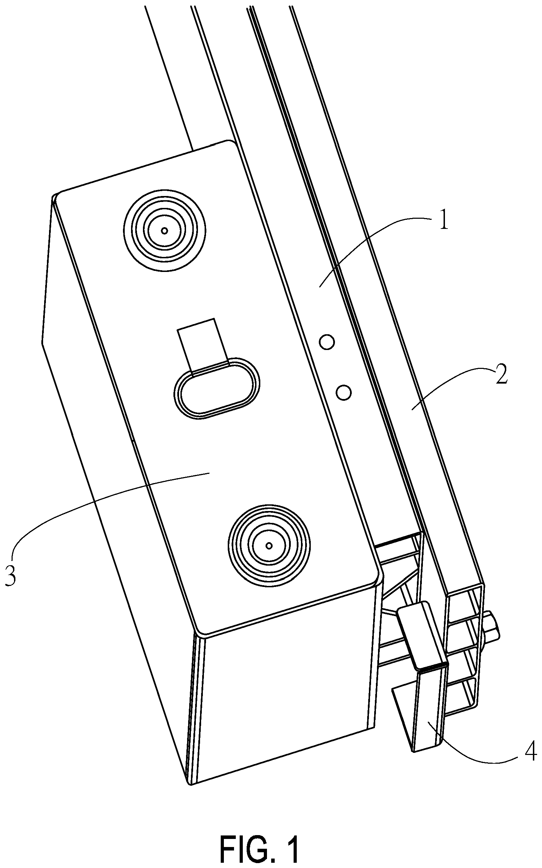

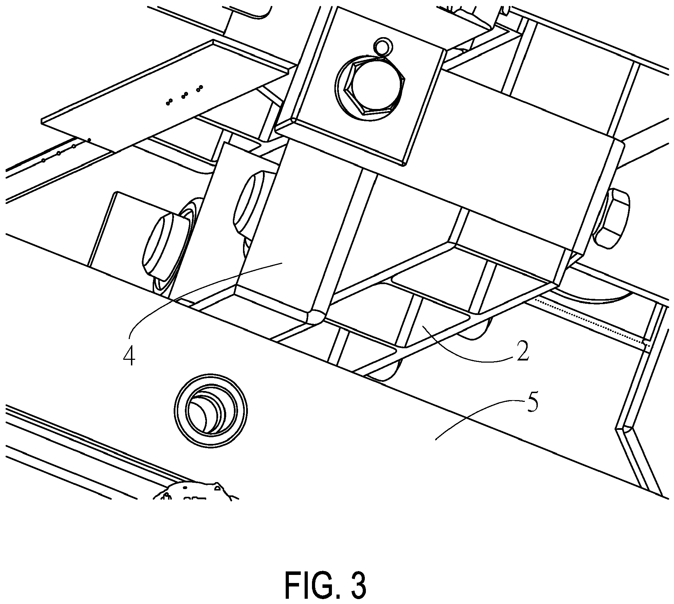

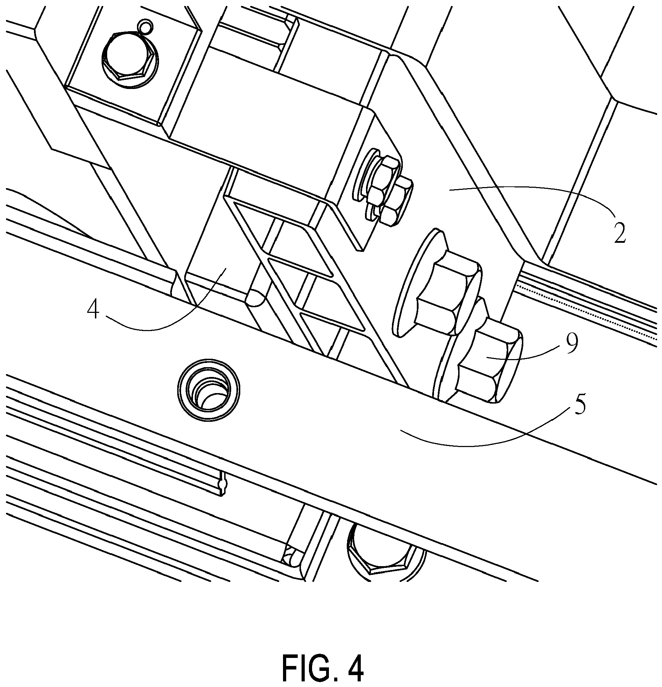

As shown in FIG. 1 to FIG. 4, an embodiment of the disclosure provides an energy storage battery box. The energy storage box includes a battery apparatus, a box body 5, and a compression component.

To be specific, in the embodiments of the disclosure, the battery apparatus includes a plurality of batteries 3 stacked in sequence. The box body 5 is internally provided with an accommodating cavity suitable for accommodating the battery apparatus. In a stacking direction of the batteries 3, one side of the box body 5 is provided with an opening, and the opening communicates with the accommodating cavity. The compression component is adapted to seal the opening, and the compression component and an edge of the opening are detachably connected.

In this way, when the opening is actually closed, the battery apparatus is first placed in the accommodating cavity, and then the compression component is moved to the opening position to seal the opening. The compression component and the opening may then be fixed, so that the compression component may press the battery apparatus. When the compression component completely seals the opening, the compression component may also compress and fasten the plurality of batteries 3 stacked in sequence at the same time. As such, an additional clamping device or fixing device is not required to be used to fix the individual batteries 3 and the energy storage battery box, and the installation process of the energy storage battery box is thus simplified.

In the actual sealing process, various sealing methods may be adopted, for example, the compression component may be directly fixed on the opening, and then the compression component and the opening may be fixed. That is, when the compression component may be embedded in the opening, the edge of the opening and the compression component may be nailed together by screws in the battery stacking direction.

As another sealing method, when the area of the compression component is greater than the area of the opening such that the compression component cannot be embedded in the opening, the compression component and the edge of the opening may be nailed together by screws in the battery stacking direction. During the process of fixing the compression component, the distance between the compression component and the opening decreases, and the compression component presses the battery apparatus in the battery stacking direction until the compression component completely seals the opening.

Certainly, it is also possible to screw the compression component and the edge of the opening together in other directions. This embodiment is merely illustrative, but not limiting, as long as the same technical effect is achieved.

Further, in an optional embodiment of the disclosure, a buffer member 7 is also placed between two adjacent batteries 3. As for the type of the buffer member 7, a silicone member or a rubber member may be used. Certainly, in order to improve the heat dissipation performance of the batteries 3, some buffer members 7 with mesh holes may be used. A person having ordinary skill in the art can make arrangement according to the actual situation. This embodiment is merely illustrative, but not limiting, as long as the same technical effect is achieved. When the buffer members 7 are provided, the displacement of the compression component is equal to the amount of compression of all the buffer members 7 during the pressing process.

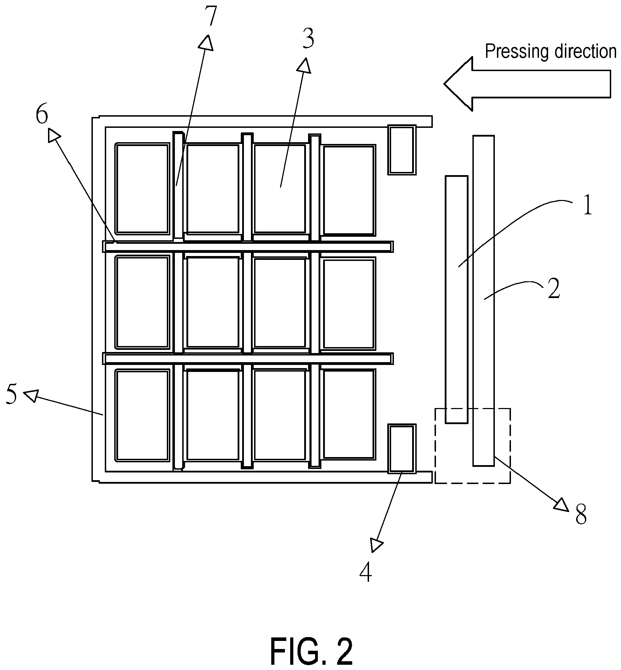

Further, in an optional embodiment of the disclosure, the compression component includes an end plate 2 and a compression plate 1. To be specific, the end plate 2 is adapted to seal the opening, and the compression plate 1 disposed on a side of the end plate 2 close to the battery apparatus. As shown in FIG. 2, in a direction perpendicular to the stacking direction, a length of the compression plate 1 is less than a length of the end plate 2, and an edge of the compression plate 1 and an edge of the end plate 2 are arranged in a step structure.

In the embodiments of the disclosure, the compression component and the opening may be fixed together in two ways. The first fixing way is that the edge of the end plate 2 is detachably connected to the edge of the opening. That is, the end plate 2 is directly connected to an outer frame of the box body 5.

The second fixing way is that the accommodating cavity is provided with a connecting portion 4 at a position close to the opening, and the connecting portion 4 is adapted to be embedded in the steps of the step structure 8. The connecting portion 4 is detachably connected to the end plate 2. In the embodiments of the disclosure, by providing the connecting portion 4, the connecting portion 4 is to be embedded in the steps of the step structure 8 when fully compressed. Herein, the batteries 3 may be prevented from being compressed by the compression component, so that the batteries 3 are prevented from being damaged to a certain extent due to the continuous compression of the compression component, and the batteries 3 are protected to a certain extent.

In the embodiments of the disclosure, by arranging the step structure 8, a compression position for the battery apparatus can be provided because the area of the end plate 2 is less than the area of the compression plate 1 after the step structure 8 is arranged. With this arrangement, the contact area between the battery located at the end of the battery apparatus and the metal piece may be prevented from being excessively large. That is, the contact area between the battery located at the end of the battery apparatus and the compression plate 1 is prevented from being excessively large. After being in contact with the end plate 2, the contact area with the compression plate 1 may be reduced. Therefore, the battery at the is prevented from dissipating heat too quickly, and the heat balance performance of the battery apparatus is thereby improved.

Certainly, a person having ordinary skill in the art can select one of the two fixing ways to fix the compression component and the opening of the box body according to the actual situation, and may also select both the fixing ways, as long as the same technical effect is achieved.

Further, in an optional embodiment of the disclosure, in the stacking direction, a thickness of the connecting portion 4 is less than a thickness of the compression plate 1. In the embodiments of the disclosure, since the thickness of the connecting portion 4 is less than the thickness of the compression plate 1, the overall amount of compression on the battery apparatus may be determined by the thickness of the connecting portion 4, the thickness of the compression plate 1, and the distance between the connecting portion 4 and the outermost battery 3 when uncompressed. Therefore, a person having ordinary skill in the art can control the overall amount of compression on the battery apparatus according to the actual situation.

Further, in an optional embodiment of the disclosure, the step structure 8 is fixed to the box body 5 through a fixing component. In the embodiments of the disclosure, by fixing the step structure 8 to the box body 5 through the fixing component, the overall amount of compression on the battery apparatus may also be adjusted through the fixing component. When a person having ordinary skill in the art finds out that during the compression process, when the amount of compression on the battery apparatus is relatively large, the fixing component may be adjusted so that the space between the compression component and the box body 5 becomes loose. As such, the amount of compression on the battery apparatus may be reduced, and the normal operation of the battery apparatus may be ensured. When a person having ordinary skill in the art finds out that during the compression process, when the amount of compression on the battery apparatus is relatively small, the fixing component may be adjusted so that the space between the compression component and the box body 5 becomes tight. As such, the amount of compression on the battery apparatus may be increased, and the stability of the battery apparatus may be ensured.

Further, in an optional embodiment of the disclosure, the step structure 8 is fixed to the connecting portion 4 of the box body 5 through the fixing component. In the embodiments of the disclosure, by fixing the step structure 8 to the connecting portion 4 of the box body 5 through the fixing component, it can avoid the need to open holes or install components on the outside of the box body 5, and the outside of the box body 5 is also guaranteed to be integral and tidy.

To be specific, the fixing component may also include screw holes and bolts 9. The screw holes are provided on the box body 5, the connecting portion 4, and the step structure 8, and the bolts 9 are adapted to be inserted into the screw holes. Certainly, the screw holes may also be provided merely on the box body 5 and the step structure 8 or on the connecting portion 4 and the step structure 8. In the embodiments of the disclosure, by setting the fixing components as the screw holes and bolts 9, the overall amount of compression on the battery apparatus may be slightly adjusted through the screw holes and bolts 9. This enables the battery apparatus to be in a normal operation state while ensuring stability.

Certainly, this embodiment merely illustrates the type of the fixing component, rather than limiting the type. A person having ordinary skill in the art can change the type of the fixing component according to the actual situation, as long as the same technical effect is achieved.

Optionally, a single partition plate 6 is arranged inside the box body 5, and the accommodating cavity is surrounded and formed between the partition plate 6 and the box body. Optionally, a plurality of partition plates 6 is arranged inside the box body 5, and the accommodating cavity is surrounded and formed between two adjacent partition plates 6 and between the partition plates 6 and the box body 5. In the embodiments of the disclosure, by arranging the partition plate 6, the heat dissipation of the batteries 3 in the adjacent accommodating cavities may be increased while the accommodating cavities are regulated, and the normal operation of the batteries 3 is ensured.

Further, in an optional embodiment of the disclosure, the compression component is provided with an avoidance slot on an end surface close to the battery apparatus, and the avoidance slot is suitable for the partition plate 6 to be inserted in. In the embodiments of the disclosure, by providing the avoidance slot, in the process of compressing the battery apparatus, the partition plate 6 may be directly inserted into the avoidance slot, so that the compression component and the partition plate 6 are prevented from colliding during the compression process. Further, the compression component can be prevented from damaging the batteries by deforming the middle of the partition plate 6 under an overpressure state. In this arrangement, the partition plate 6 can be deformed at its ends. That is, the part of the partition plate 6 in the avoidance slot is deformed. The avoidance slot can absorb the volume change caused by the partial deformation of the partition plate 6 to ensure the normal operation of the batteries.

In the embodiments of the disclosure, a fastening method for an energy storage battery box is also provided, and the method specifically includes the following steps.

In S 1, first, a plurality of batteries 3 are stacked in groups in the extending direction of the partition plate 6, and at least one buffer pad is provided between adjacent batteries 3.

In S2, with the compression plate 1 facing the batteries 3 and the end plate 2 facing outwards, the step structure 8 and the box body 5 are fixedly connected by bolts 9. When the step structure 8 is completely in contact with the connecting portion 4, the fastening of the battery pack 3 is completed.

In this way, after the buffer member 7 is placed between two adjacent batteries 3, an external force may be directly applied to the compression component in the stacking direction, so that the battery apparatus can be pressed. When the compression component completely seals the opening, the compression component may also compress and fasten the plurality of batteries 3 stacked in sequence at the same time. As such, an additional clamping device or fixing device is not required to be used to fix the individual batteries 3 and the energy storage battery box, and the installation process of the energy storage battery box is thus simplified.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. An energy storage battery box, comprising:
a battery apparatus, comprising a plurality of batteries (3) stacked in sequence;
a box body (5) internally provided with an accommodating cavity suitable for accommodating the battery apparatus, wherein one side of the box body (5) is provided with an opening in a stacking direction of the batteries (3), and the opening communicates with the accommodating cavity; and
a compression component adapted to seal the opening, wherein the compression component and an edge of the opening are detachably connected through a fixing component, and at least one surface of the compression component is in close contact with the battery apparatus.

2. The energy storage battery box according to claim 1, wherein a fixing direction when fixing the compression component in the opening is the same as the stacking direction of the batteries (3).

3. The energy storage battery box according to claim 2, wherein a buffer member (7) is placed between two adjacent batteries (3).

4. The energy storage battery box according to claim 3, wherein the compression component comprises:
an end plate adapted to seal the opening; and
a compression plate disposed on a side of the end plate close to the battery apparatus, wherein in a direction perpendicular to the stacking direction, a length of the compression plate is less than a length of the end plate, and an edge of the compression plate and an edge of the end plate are arranged in a step structure (8).

5. The energy storage battery box according to claim 4, wherein the edge of the end plate is detachably connected to the edge of the opening, and/or
the box body (5) is provided with a connecting portion at a position close to the opening, the connecting portion is adapted to be embedded in the steps of the step structure (8), and the connecting portion is detachably connected to the end plate.

6. The energy storage battery box according to claim 5, wherein in the stacking direction, a thickness of the connecting portion is less than a thickness of the compression plate.

7. The energy storage battery box according to any one of claims 4-6, wherein the step structure (8) is fixed to the box body (5) through the fixing component.

8. The energy storage battery box according to claim 7, wherein the step structure (8) is fixed to the connecting portion of the box body (5) through the fixing component.

9. The energy storage battery box according to claim 8, wherein the fixing component comprises:
screw holes provided on the box body (5) and/or the connecting portion and on the step structure (8); and
bolts (9) adapted to be inserted into the screw holes.

10. The energy storage battery box according to claim 8 or 9, wherein a single partition plate (6) is arranged inside the box body (5), and the accommodating cavity is surrounded and formed between the partition plate (6) and the box body (5); or
a plurality of partition plates (6) is arranged inside the box body (5), and the accommodating cavity is surrounded and formed between two adjacent partition plates (6) and between the partition plates (6) and the box body (5).

11. The energy storage battery box according to claim 10, wherein the compression component is provided with an avoidance slot on an end surface close to the battery apparatus, and the avoidance slot is suitable for the partition plate (6) to be inserted in.
